**Europäisches Patentamt**

**European Patent Office**

**Office européen des brevets**

(19)

(11) Veröffentlichungsnummer : **0 131 739**
**B1**

(12) # EUROPÄISCHE PATENTSCHRIFT

(45) Veröffentlichungstag der Patentschrift :
**23.12.87**

(21) Anmeldenummer : **84106555.0**

(22) Anmeldetag : **07.06.84**

(51) Int. Cl.⁴ : **F 16 B 29/00**, F 16 B 43/00,
F 16 B 37/00, B 60 B 3/16

(54) **Radmutter für Nutzfahrzeugräder.**

(30) Priorität : **13.07.83 DE 3325255**

(43) Veröffentlichungstag der Anmeldung :
**23.01.85 Patentblatt 85/04**

(45) Bekanntmachung des Hinweises auf die Patenterteilung : **23.12.87 Patentblatt 87/52**

(84) Benannte Vertragsstaaten :
**FR GB IT NL**

(56) Entgegenhaltungen :
**EP-A- 0 032 643**
**EP-A- 0 066 794**
**WO-A-82 /026 90**
**DE-A- 3 044 778**
**DE-U- 7 210 833**

(73) Patentinhaber : **Erich Neumayer Beteiligungs- und
Verwaltungsgesellschaft mbH & Co. KG
Wilhelm-Zangen-Strasse 9
D-7613 Hausach (DE)**

(72) Erfinder : **Goiny, Lothar
Hegerfeldstrasse 1
D-7613 Hausach (DE)**

(74) Vertreter : **Baumann, Eduard, Dipl.-Phys.
Postfach 1201 Sattlerstrasse 1
D-8011 Höhenkirchen/München (DE)**

**Beschreibung**

Die Erfindung bezieht sich auf eine Radmutter gemäß dem Oberbegriff des Anspruches 1.

Eine derartige Radmutter mit einem geschlossenen Ring als Arretierungsmittel ist aus der EP-A-66 794 bekannt. Ein Druckteller mit oben angeordnetem nach innen vorspringendem Ring steht lose mit einem unteren äußeren Ring am Ende des Halzansatzes drehbar im Eingriff. Das Innengewinde endet oberhalb des abgeschrägten inneren Endes des Halsansatzes.

Der Druckteller weist eine linienförmige Ringauflage im äußeren Durchmesserbereich auf. Zur Anzeige eines maximal zulässigen Anzieh-Drehmomentes ist eine zusammendrückbare Feder vorgesehen.

Eine ähnliche Radmutter ist im deutschen Gebrauchsmuster 7 210 833 beschrieben.

Diese als Sechskant-Bundmutter ausgebildete Radmutter hat sich vielfach zur Befestigung von nabenzentrierten Rädern von Lastkraftwagen bewährt, wobei die genaue Zentrierung der Radschüssel vor dem Anziehen der Radmuttern bereits in in der Radnabe erfolgt. Im Unterschied zur Bolzenzentrierung weisen die Bolzenlöcher keine kalottenartigen Vertiefungen auf, benötigen jedoch größere Durchgangsbohrungen für die Radbolzen. Die Radmutter gemäß deutschem Gebrauchsmuster 7 210 833 weist einen massiven Druckteller mit verbreiteter Anlagefläche an der Radschüssel auf. Dieser Druckteller ist über einen am Mutternkörper vorgesehenen inneren Halsansatz, dessen freies ringförmiges Ende nach außen gebördelt ist, frei drehbar und darüberhinaus Planlaufabweichungen zwischen Anlageflächen und Muttergewinde selbsttätig ausgleichend mit dem Mutterkörper verbunden. Beim Anziehen der Mutter liegt der Druckteller fest an der Radschüssel an, während sich lediglich der Mutternkörper dreht, wobei zwischen Unterseite eines verbreiterten Bundes und Oberseite des Drucktellers eine Reibungsfläche vorgesehen ist.

Diese Mutter ist allerdings nicht für bolzenzentrierte Räder vorgesehen und geeignet. Sie ist auf übliche Stahlräder und darauf längenmäßig abgestimmte, an der Radscheibe vorgesehene Befestigungsbolzen ausgelegt.

Seit längerer Zeit besteht jedoch auch für Nutzfahrzeugräder, insbesondere bei Lastkraftwagen und Anhängern, Karawans etc., die Tendenz zur Leichtbauweise, die sich insbesondere im Einsatz von Aluminiumrädern auch für diesen Bereich äußert.

Hier ergeben sich jedoch völlig neue Befestigungsprobleme. Insbesondere ist hier die Radschüsseldicke größer und darüberhinaus häufig unterschiedlich, beispielsweise für das Vorder- und Hinterrad eines Lastkraftwagens ; besonders große Unterschiede ergeben sich aufgrund der hinten meist verwendeten Doppelräder.

Würde man herkömmliche Radmuttern verwenden, so würde dies eine konstruktive Änderung der Radbolzen an den Radscheiben bedingen, und zwar müßte für Vorder- und Hinterräder in der Regel eine andere Bolzenlänge gewählt werden. Bereits bei der Herstellung des Lastwagens selbst müßte entschieden werden, ob übliche Stahlräder oder Aluminiumräder montiert werden sollen.

Der Erfindung liegt die Aufgabe zugrunde, eine Radmutter gemäß dem Oberbegriff des Anspruches 1 so auszubilden, daß die wahlweise Verwendung von Stahlrädern oder Aluminiumrädern bei Lastkraftwagen und Anhängern, ohne Änderung der Radbolzen ermöglicht wird.

Die Aufgabe wird erfindungsgemäß durch die Merkmale des Kennzeichens des Anspruches 1 gelöst. Weitere Ausgestaltungen der Erfindung sind in den Unteransprüchen ausgeführt.

Beim Gegenstand der Erfindung kann die Länge des Halsansatzes ohne Veränderung des Grundprinzips an unterschiedliche Radschüsseldicken angepaßt werden. Der besonders ausgestaltete Halsansatz ermöglicht gleichzeitig eine Zentrierung des Rades, so daß diese Mutter nicht nur für nabenzentrierte Räder, sondern auch für bolzenzentrierte Räder einsetzbar ist.

Eine Überlegung geht zunächst dahin, die Befestigung zwischen Druckteller und Halsansatz so zu bewerkstelligen, daß die Innenseite des Mutternkörpers einschließlich des Halsansatzes völlig unbeschädigt bleibt. Dennoch werden die gleichen Vorteile hinsichtlich des Zusammenwirkens von Mutternkörper und Druckteller wie beim Stande der Technik erzielt. Diese besondere Befestigungsart hat den weiteren Vorteil, daß zum einen der Halsansatz des Mutternkörpers beliebig verlängert und somit unterschiedlichen Radschüsseldicken angepaßt werden kann, wobei der Außendurchmesser des Halsansatzes durch die Bolzenöffnung der Radschüssel hindurchgeht und gleichzeitig die Radschüssel zentriert. Die Zentrierung und das Einschieben des Halsansatzes wird noch durch eine Abschrägung des freien ringförmigen Endes des Halsansatzes nach außen erleichtert. Ein weiterer wesentlicher Vorteil der genannten Konstruktion besteht darin, daß es nunmehr möglich ist, das Innengewinde der Mutter praktisch beliebig in Richtung Radschüssel des Lastkraftwagens oder Anhängers zu verlängern, auch über die Arretierungsmittel von Mutternkörper und Druckteller hinaus, und sogar über die Auflagefläche des Drucktellers an der Radschüssel hinaus. Auf diese Weise ist es möglich, das Gewinde so weit in Richtung Radbolzen zu verlängern, daß eine Befestigung an allen, auch kürzeren, Radbolzen möglich ist, unabhängig von der Radschüsseldicke.

Zweckmäßigerweise werden bereits werksseitig Radmuttern mit unterschiedlicher Länge von Halsansatz und Innengewinde unter Verwendung des gleichen beschriebenen Konstruktionsprinzips angeboten. Es ist jedoch auch möglich, insbesondere in Notfällen, eine Mutter mit längerem Halsansatz so abzuschneiden oder abzuschleifen, daß sie den gewünschten Einsatzzweck erfüllt. Dies ist auch deswegen möglich, da das Ende des Halsansatzes nicht so stark gehärtet ist, wie der Druckteller.

Ein Ausführungsbeispiel der Erfindung ist in der Zeichnung dargestellt.

Es zeigt:

Figur 1 eine Seitenansicht auf eine Radmutter, wobei der rechte Teim im Längsschnitt dargestellt ist,

Figur 2 die Verbindung zwischen Mutternteil und Druckteller in stark vergrößerter Darstellung.

In der Zeichnung ist der Mutternkörper allgemein mit 1 bezeichnet. In Richtung auf die Radschüssel (im befestigten Zustand) ist ein nach außen verbreiterter Bund 2 dargestellt, der in Richtung Radschüssel durch eine Unterseite 4 begrenzt ist, welche eine untere Kontaktfläche bildet. Diese Unterseite 4 ist plan ausgeführt und weist gegenüber einer Querebene zur Achse der Radmutter einen Winkel von vorzugsweise 10 Grad bis 30 Grad auf. Die Unterseite des Bundes 2 bildet eine Reibfläche, die mit einer entsprechenden Gegenfläche 5 in Form der Oberseite 5 des Drucktellers 3 zusammenwirkt. Innerhalb des Drucktellers 3 weist der Mutternkörper 1 einen in Richtung zur Radschüssel verlängerten Halsansatz 6 auf, wobei auch das Innengewinde 9 über die Auflagefläche 10 an der (nicht dargestellten) Radschüssel hinaus verlängert ist.

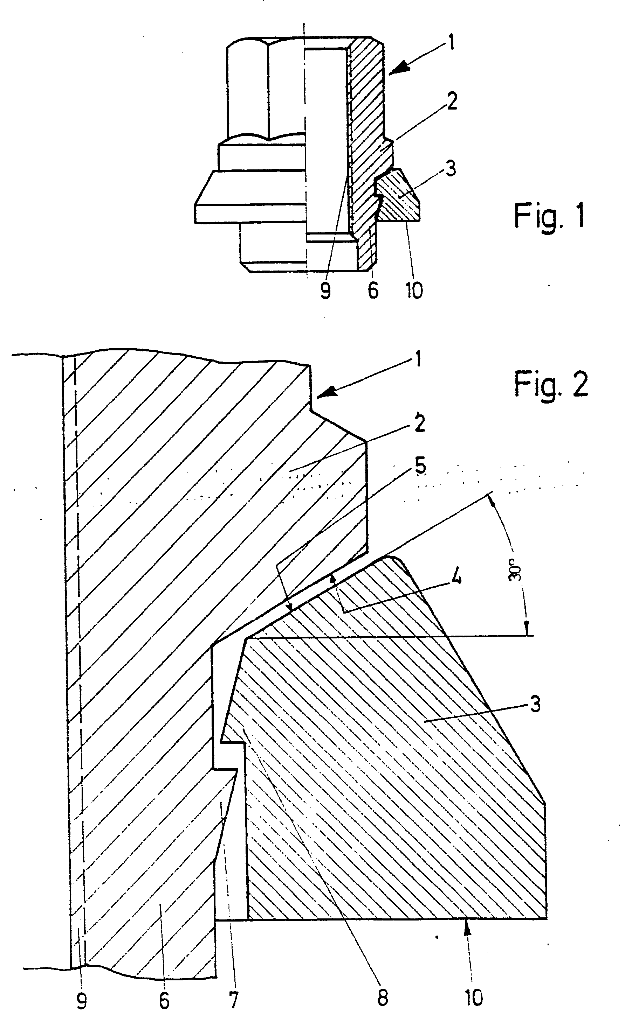

Insbesondere aus Figur 2 gehen Einzelheiten der Befestigung zwischen Halsansatz 6 des Mutternkörpers 1 und Druckteller 3 hervor, die erst eine Verlängerung des Halsansatzes 6 sowie des Gewindes 9 in Richtung auf die Radschüssel beziehungsweise durch die Bolzenöffnung der Radschüssel hindurch ermöglichen. Dazu dienen erste Arretierungsmöglichkeiten 7, in Form einer teilweisen oder ganzen ringförmigen Verbreiterung der Außenseite des Halsansatzes, sowie damit zusammenwirkende und darauf abgestimmte zweite Arretierungsmittel 8, die im inneren und oberen Bereich des Drucktellers 3 vorgesehen sind und die Form eines ganzen oder teilweisen Ringes aufweisen. Der äußere Ring 7 ist einstückig mit dem Halsansatz 6 und somit dem Mutternkörper 1, der innere Ring 8 ist einstückig mit dem Druckteller 3 ausgebildet.

Gemäß Figur 2 ist am Außenumfang des Halsansatzes 6 eine kegelförmige Verbreiterung vorgesehen, die von der Richtung des freien Endes des Halsansatzes ausgeht, allmählich größer wird und bei der Kegel-Basis abrupt auf den Ausgangswert abfällt, so daß sich eine Art Ringhaken ergibt. Statt der symmetrischen ringförmigen Ausbildung wäre es für eine Funktion auch möglich, lediglich einzelne, entsprechend ausgebildete Haken oder Vorsprünge vorzusehen. Diese teilweise kegelförmige Verbreiterung 7 wirkt zusammen mit einer entsprechend angepaßten Konusfläche 8 am Druckteller, dessen geringster Innendurchmesser der Auflagefläche 10 zugewandt ist und der allmählich abnimmt, bis er in die Oberseite 5 übergeht, welche eine Reibungsfläche mit der Unterseite 4 des Bundes 2 bildet. Hier kommt es im wesentlichen darauf an, daß eine Art Gegenhaken gebildet wird.

Der Innendurchmesser an der engsten Stelle der teilweisen konusartigen Verengung 8 des Druckteller-Innendurchmessers muß etwas kleiner sein als der größte Außendurchmesser der kegelartigen teilweisen Verbreiterung 7 des Halsansatzes 6 des Mutterkörpers 1. Bei der Montage wird dann lediglich der Druckteller 3 unter Druck über den Ringhaken der Durchmesserverbreiterung 7 hinweg geschoben. Aufgrund der elastischen Eigenschaften von Druckteller 3 und Halsansatz 6 ist ein späteres Lösen von Druckteller 3 und Mutternkörper 1 nicht mehr möglich. Die beschriebene Konstruktion nebst einzuhaltenden Toleranzen ermöglicht eine leichte Drehbarkeit des Mutternkörpers gegenüber dem Druckteller. Die beiden Reibflächen können konisch beziehungsweise konvex konkav zueinander ausgebildet sein.

Selbstverständlich ist es für das Funktionieren einer derartigen Mutter auch notwendig, die geeigneten Materialien auszuwählen.

**Patentansprüche**

1. Radmutter für Nutzfahrzeugräder aus Leichtmetall, mit einem Mutternkörper (1), der an dem der Radschüssel zugewandten Ende einen nach außen hin verbreiterten Bund (2) aufweist, mit einem an den Bund (2) anschließenden, unverlierbar und leicht drehbar am Mutternkörper (1) befestigten Druckteller (3), dessen Oberseite (5) mit der Unterseite (4) des Bundes (2) eine Reibungsfläche bildet, mit einem, den Mutternkörper (1) an dem der Radschüssel zugewandten Ende verlängernden Halsansatz (6), dessen Außendurchmesser geringer als der Innendurchmesser des Drucktellers (3) ist und dessen Außenseite erste Arretierungsmittel in Form eines äußeren Ringes oder Teilringes (7) aufweist, die mit zweiten Arretierungsmitteln in Form eines inneren Ringes oder Teilringes (8) an der Innenseite des Drucktellers zusammenwirken, gekennzeichnet durch

a) eine derartige Anpassung der zweiten Arretierungsmittel an die ersten Arretierungsmittel, daß aufgrund von elastischen Materialeigenschaften lediglich ein nicht umkehrbares Aufschieben des Drucktellers (3) über die ersten Arretierungsmittel (7) hinweg zum Erzielen einer nicht lösbaren, leicht drehbaren Verbindung zwischen Mutternkörper (1) und Druckteller (3) ermöglicht wird,

b) eine Verlängerung des Innengewindes (9) des Mutternkörpers (1) in den Bereich der ersten Arretierungsmittel (7) und des darunterliegenden Halsansatzes,

c) eine Verlängerung des Halsansatzes (6) und des Innengewindes (9) über die Auflagefläche (10) des Drucktellers (3) hinaus zur Zentrierung des Rades und zur Erzielung eines Formschlusses mit dem Bolzendurchgangsloch der Radschüssel.

2. Radmutter nach Anspruch 1, dadurch gekennzeichnet, daß der äußere Ring (7) einen vorzugsweise einstückig mit dem Mutternkörper (1) hergestellten Hohlkegel bildet, dessen engste Stelle von der Richtung des freien Endes des Halsansatzes (6) ausgeht, und dessen Basis abrupt auf den Außendurchmesser des Halsansatzes (6) zurückspringt.

3. Radmutter nach Anspruch 1 oder 2, dadurch gekennzeichnet, daß der innere Ring (8) in dem der Radschüssel abgewandten Teil des Drucktellers (3) vorgesehen ist, im wesentlichen eine an den äußeren Ring (7) angepaßte Konusfläche bildet, deren Anfang mit geringstem Innendurchmesser der Auflagefläche (10) des Drucktellers (3) zugewandt ist und vorzugsweise einstückig mit dem Druckteller (3) hergestellt ist.

4. Radmutter nach einem der Ansprüche 1 bis 3, dadurch gekennzeichnet, daß das ringförmige freie Ende des Halsansatzes (6) nach außen abgeschrägt ist.

5. Radmutter nach einem der Ansprüche 1 bis 4, dadurch gekennzeichnet, daß die Unterseite (4) des Bundes (2) gegenüber einer Ebene quer zur Mutternachse abgeschrägt ist, vorzugsweise in einem Winkel zwischen 10 und 30 Grad, und daß die eine Gegen-Reibungsfläche für die Unterseite (4) bildende Oberseite (5) des Drucktellers (3) entsprechend angepaßt ist.

6. Radmutter nach einem der Ansprüche 1 bis 5, dadurch gekennzeichnet, daß Unterseite (4) und Oberseite (5) eben ausgebildet sind.

7. Radmutter nach einem der Ansprüche 1 bis 5, dadurch gekennzeichnet, daß die Unterseite (4) des Bundes (2) konvex und die daran angepaßte Oberseite (5) des Drucktellers (3) konkav ausgebildet ist.

8. Radmutter nach einem der Ansprüche 1 bis 7, dadurch gekennzeichnet, daß die Oberflächen von Unterseite (4) und Oberseite (5) unterschiedlich und derart beschichtet sind, daß korrosions- und druckfeste Reibungsflächen mit verringertem Reibungswiderstand und hoher Lebensdauer entstehen.

**Claims**

1. A wheel nut for light alloy wheels of commercial vehicles, comprising a nut body (1) having a widened collar (2) on its end facing the wheel nave, a pressure disc (3) contiguous with the collar (2) and captivated for easy rotation on the nut body (1), the upper side (5) of said pressure disc constituting a friction surface with the underside (4) of the collar (2), a neck portion (6) which extends the nut body (1) at the end presented to the wheel nave and having an outer diameter which is smaller than the inner diameter of the pressure disc (3), the outer side of said neck portion including first locking means (7) configured as an outer ring or partial ring for cooperation with second locking means (8) configured as an inner ring or partial ring on the inner side of the pressure disc, characterised by

a) such a matching of the second locking means with the first locking means that due to elastic properties of the material it is possible only to irreversibly push the pressure disc (3) over and beyond the first locking means (7) so as to achieve a non-releasable, easily rotatable connection between nut body (1) and pressure disc (3),

b) an extension of the female thread (9) of the nut body (1) into the region of the first locking means (7) and of the neck portion disposed therebeneath,

c) an extension of the neck portion (6) and of the female thread (9) beyond the seating surface (10) of the pressure disc (3) for centring the wheel and obtaining a form-fit with the stud hole of the wheel nave.

2. Wheel nut as claimed in claim 1, characterised in that the outer ring (7) constitutes a hollow cone, which is preferably formed integrally with the nut body (1) and the narrowest portion of which proceeds from the direction of the free end of the neck portion (6) while the base thereof is abruptly set back to the outer diameter of the neck portion (6).

3. Wheel nut as claimed in claim 1 or claim 2, characterised in that the inner ring (8) is provided in the part of the pressure disc (3) remote from the wheel nave and substantially constitutes a cone surface which is matched with the outer ring (7) and the start of which having the smallest inner diameter is presented to the seating surface (10) of the pressure disc (3) and is preferably formed integrally with the pressure disc (3).

4. Wheel nut as claimed in any one of the claims 1 to 3, characterised in that the annular free end of the neck portion (6) is outwardly bevelled.

5. Wheel nut as claimed in any one of the claims 1 to 4, characterised in that the underside (4) of the collar (2) is inclined relative to a plane extending transversely to the nut axis, preferably at an angle between 10 and 30°, and that the upper side (5) of the pressure disc (3), which forms a counter friction surface for the underside (4), is correspondingly matched.

6. Wheel nut as claimed in any one of the claims 1 to 5, characterised in that underside (4) and upper side (5) are planar.

7. Wheel nut as claimed in any one of the claims 1 to 5, characterised in that the underside (4) of the collar (2) is convex and the complementary upper side (5) of the pressure disc (3) is concave.

8. Wheel nut as claimed in any one of the claims 1 to 7, characterised in that the surfaces of underside (4) and upper side (5) are different and are coated so as to form corrosion and pressure resistant friction surfaces having reduced frictional resistance and prolonged life.

**Revendications**

1. Ecrou de fixation pour roues de véhicules utilitaires en alliage léger, comprenant un corps d'écrou (1) présentant du côté du voile de la roue un collet (2) élargi vers l'extérieur, une bague de serrage (3) consécutive au collet (2), liée au corps de l'écrou (1) de façon à ne pas pouvoir être séparé de et à pouvoir tourner facilement autour de celui-ci, et dont la face supérieure (5) forme une surface de friction avec la face inférieure (4) du collet (2), un col (6) prolongeant le corps de l'écrou (1) en direction du voile de la roue, dont le diamètre extérieur est inférieur au diamètre intérieur de la bague de serrage (3) et dont la face extérieure présente des premiers moyens d'arrêt (7) en forme d'un anneau extérieur entier ou partiel, lesquels coopèrent avec des deuxièmes moyens d'arrêt (8) prévus sur la face intérieure de la bague de serrage, caractérisé par

a) une adaptation des deuxièmes moyens d'arrêt aux premiers moyens d'arrêt telle que par suite des propriétés élastiques du matériau, une translation irréversible de la bague de serrage (3) au-delà des premiers moyens d'arrêt (7) suffit pour obtenir une liaison inséparable et facilement rotative entre le corps de l'écrou (1) et la bague de serrage (3),

b) une prolongation du filetage intérieur (9) du corps de l'écrou (1) dans la zone des premiers moyens d'arrêt (7) et du col situé au-dessous de ces derniers,

c) une prolongation du col (6) et du filetage intérieur (9) au-delà de la surface d'appui (10) de la bague de serrage (3), permettant un centrage de la roue et en vue d'obtenir une fermeture géométrique avec le trou de passage du boulon pratiqué dans le voile de la roue.

2. Ecrou de fixation de roue selon la revendication 1, caractérisé en ce que l'anneau extérieur (7) forme un cône creux, de préférence réalisé en une seule pièce avec le corps de l'écrou (1), dont la pointe est dirigée vers l'extrémité libre du col (6) et dont la base revient abruptement sur le diamètre extérieur de ce même col (6).

3. Ecrou de fixation de roue selon la revendication 1 ou 2, caractérisé en ce que l'anneau intérieur (8) est prévu dans la partie de la bague de serrage (3) détournée du voile de la roue et forme d'une façon générale une surface conique adaptée à l'anneau extérieur (7), dont la naissance, caractérisée par le plus petit diamètre intérieur, est dirigée vers la surface d'appui (10) de la bague de serrage (3) et forme de préférence une seule pièce avec cette bague de serrage (3).

4. Ecrou de fixation de roue selon l'une des revendications 1 à 3, caractérisé en ce que l'extrémité du col (6), en forme d'anneau, est biseautée vers l'extérieur.

5. Ecrou de fixation de roue selon l'une des revendications 1 à 4, caractérisé en ce que la face inférieure (4) du collet (2) est biseautée par rapport à un plan perpendiculaire à l'axe de l'écrou, de préférence selon un angle de 10° à 30°, et que la face supérieure (5) de la bague de serrage (3) formant la contre-surface de friction pour la face inférieure (4) est adaptée de façon correspondante.

6. Ecrou de fixation de roue selon l'une des revendications 1 à 5, caractérisé en ce que la face inférieure (4) et la face supérieure (5) sont planes.

7. Ecrou de fixation de roue selon l'une des revendications 1 à 5, caractérisé en ce que la face inférieure (4) du collet (2) est convexe et la face supérieure (5) y est adaptée de la bague de serrage (3) concave.

8. Ecrou de fixation de roue selon l'une des revendications 1 à 7, caractérisé en ce que les surfaces inférieures (4) et supérieures (5) sont différentes et enduites de sorte à obtenir des surfaces de friction résistantes à la pression et à la corrosion et présentant une résistance à la friction réduite ainsi qu'une longévité élevée.

Fig. 1

Fig. 2